# EUROPÄISCHE PATENTSCHRIFT

(11) **EP 2 475 897 B1**
(45) Veröffentlichungstag und Bekanntmachung des Hinweises auf die Patenterteilung: **12.08.2015**
(21) Anmeldenummer: 11725662.8
(22) Anmeldetag: 03.06.2011
(51) Int. Cl.: F16B 23/00

(54) **DREHANTRIEBSAUSBILDUNG**
ROTARY DRIVE DESIGN
SYSTÈME D'ENTRAÎNEMENT EN ROTATION

(30) Priorität: 04.06.2010 DE 102010029692
(43) Veröffentlichungstag der Anmeldung: 18.07.2012
(73) Patentinhaber: SWG Schraubenwerk Gaisbach GmbH, 74638 Waldenburg (DE)
(72) Erfinder: STIEBITZ, Günter, 74638 Waldenburg (DE); ROLL, Patrick, 74523 Schwäbisch Hall (DE); GLATTBACH, Joachim, 74629 Pfedelbach (DE)
(74) Vertreter: Patentanwälte Ruff, Wilhelm, Beier, Dauster & Partner
(86) Internationale Anmeldenummer: PCT/EP2011/059180
(87) Internationale Veröffentlichungsnummer: WO 2011/151435

(56) Entgegenhaltungen:
- EP-A1- 0 524 617

## Beschreibung

Die Erfindung betrifft eine Drehantriebsausbildung, mit deren Hilfe eine Drehbewegung von einem Werkzeug auf ein Werkstück übertragen werden kann.

Bei Schrauben sind Drehantriebsausbildungen bekannt, die eine zumindest angenäherte zylindrische Vertiefung oder einen solchen Vorsprung enthalten, deren beziehungsweise dessen Form von einer Kreiszylinderform abweicht.

Bei einer bekannten Schraubenkopfform (US-A-3584667) ist der Außenumfang der zylindrischen Ausnehmung beziehungsweise des zylindrischen Vorsprungs von abwechselnd nach innen und außen gerichteten tangential ineinander übergehenden Kreisbögen gebildet, wobei die nach innen gerichteten Kreisbögen den doppelten Durchmesser haben wie die nach außen gerichteten Kreisbögen.

Bei einem weiteren bekannten Antriebssystem mit einer zylindrischen Vertiefung weist der Querschnitt der Vertiefung nach außen gerichtete Lappen und zwischen den Lappen angeordnete Nuten auf. Die Form der Lappen und der Nuten ist elliptisch. Damit soll eine bessere Kraftübertragung erreicht werden (US 5207132).

Wegen der zylindrischen Grundform sowohl der Antriebsausbildung in der Schraube als auch an dem Werkzeug und der benötigten Herstellungstoleranzen gibt es zwischen der das Drehmoment übertragenden Fläche des Werkzeugs und der das Drehmoment aufnehmenden Fläche des Werkstücks immer einen Spalt. Dieser Spalt führt dazu, dass das Werkzeug während des Drehantriebs quer zur Drehachse verlaufende Kräfte erfährt, die dazu führen können, dass die Drehachse des Werkzeugs und die Drehachse des Werkstücks nicht übereinstimmen.

Um dieses Problem anzugehen, ist bereits eine Drehantriebsausbildung vorgeschlagen worden, bei der die Seitenwand zwischen ihren zylindrischen Teilen Kegelflächen aufweist, wobei alle Kegelflächen Teile der Oberfläche eines einzigen Kegels sind, dessen Achse mit der Achse der Vertiefung beziehungsweise des Antriebsvorsprungs zusammenfällt (EP 524617 A1). Dadurch erfolgt eine Zentrierung des Werkzeugs gegenüber dem Werkstück, so dass die Achsen von Werkstück und Werkzeug in gegenseitiger Verlängerung bleiben.

Der Erfindung liegt die Aufgabe zu Grunde, eine Drehantriebsausbildung zu schaffen, die in der Lage ist, höhere Drehmomente bei sonst gleichen Abmessungen zu übertragen.

Zur Lösung dieser Aufgabe schlägt die Erfindung eine Drehantriebsausbildung mit den Merkmalen des Anspruchs 1 und eine Drehantriebsausbildung mit den Merkmalen des Anspruchs 2 vor. Weiterbildungen der Erfindung sind Gegenstand von Unteransprüchen.

Die Drehantriebsausbildung setzt sich im Fall einer Antriebsvertiefung wieder aus zwei geometrischen Strukturen zusammen, nämlich einer zylindrischen Grundform, deren Kontur sich kontinuierlich zwischen einem minimalen Radius und einem maximalen Radius von einer Mittelachse ausgehend ändert, so dass abwechselnd Vorsprünge und Rücksprünge gebildet werden. Diese werden im Stand der Technik teilweise als Lappen und Nuten bezeichnet. Zu dieser zylindrischen Grundform kommen dann Kegelflächen, an denen also von der zylindrischen Form abgewichen wird. Diese Kegelflächen dienen zur Zentrierung. Im Gegensatz zum Stand der Technik liegen aber nicht alle Kegelflächen auf einem gemeinsamen Kegel, sondern jede Kegelfläche liegt auf einem eigenen Kegel. Die Achse dieses Kegels fällt nicht mit der Mittelachse der Vertiefung beziehungsweise im Falle eines Antriebsvorsprungs nicht mit der Mittelachse des Antriebsvorsprungs zusammen.

Üblicherweise sind die Vorsprünge und Rücksprünge so ausgebildet, dass sie untereinander identisch sind. Alle Vorsprünge weisen die gleiche Form auf, und auch alle Rücksprünge weisen die gleiche Form auf. Dadurch ist eine Punktsymmetrie des Querschnitts gegeben.

Die Kegelflächen liegen in einem Bereich zwischen dem maximalen und minimalen Durchmesser der Antriebsvertiefung beziehungsweise des Antriebsvorsprungs.

Durch die Versetzung der Achse jedes Kegels jeder Kegelfläche in radialer Richtung nach außen wird die von der Kegelfläche belegte Oberfläche kleiner als im Stand der Technik, so dass die der Drehmomentübertragung dienenden Flächen größer werden.

In Weiterbildung der Erfindung kann vorgesehen sein, dass die jeweilige Kegelfläche zwischen den Vorsprüngen der Grundform ausgebildet ist.

In nochmaliger Weiterbildung der Erfindung kann vorgesehen sein, dass die axiale Erstreckung der Kegelfläche etwa der Tiefe der Antriebsvertiefung beziehungsweise der Höhe des Antriebsvorsprungs entspricht. Dadurch wird trotz der Verringerung der Größe der Oberfläche der Kegelfläche dennoch eine ausreichend große Zentrierungsfläche für den Zentrierungsvorgang ermöglicht.

Es wurde bereits erwähnt, dass die Kegelachse der Kegelflächen von der Mittelachse der Vertiefung beziehungsweise des Antriebsvorsprungs nach außen versetzt ist. Insbesondere kann vorgesehen sein, dass die Achse über mehr als die Hälfte des Minimalradius nach außen versetzt ist. Beispielsweise kann vorgesehen sein, dass der Abstand der Achse der Kegelfläche von der Achse der Antriebsvertiefung beziehungsweise des Antriebsvorsprungs größer ist als der Abstand der Achse der Kegelfläche von dem Rücksprung der Seitenwand.

Insbesondere kann in Weiterbildung vorgesehen sein, dass die Achse der Kegelflächen den Abstand des Rücksprungs von der Achse der Antriebsvertiefung beziehungsweise des Antriebsvorsprungs im Verhältnis von mindestens etwa 1 zu 3, vorzugsweise von 1 zu 5 teilt.

In nochmaliger Weiterbildung der Erfindung kann vorgesehen sein, dass die Breite jeder Kegelfläche in Richtung auf die Spitze des zugehörigen Kegels abnimmt, vorzugsweise bis auf null.

Bei den Kegelflächen, die zwischen den Vorsprüngen angeordnet sind, kann es sich um Teile von Kreiskegeln handeln.

Es ist aber ebenfalls möglich und wird von der Erfindung vorgeschlagen, dass es sich dabei um Teile von elliptischen Kegeln oder auch ovalen Kegeln handelt. Bei den Kegeln mit nicht kreisförmigem Querschnitt ist insbesondere vorgesehen, dass die längere Abmessung des Querschnitts tangential zu der Drehantriebsausbildung verläuft.

Die Erfindung schlägt vor, eine solche Drehantriebsausbildung, wie sie hierin beschrieben wurde und wird, an einem drehanzutreibenden Gegenstand auszubilden, beispielsweise einer Schraube. Aber auch an sonstigen drehanzutreibenden Gegenständen, bei denen es auf die Übertragung hoher Drehmomente und geringes Spiel ankommt, kann eine Drehantriebsausbildung vorgesehen werden.

Die Erfindung schlägt ebenfalls vor, eine Drehantriebsausbildung, wie sie hierin beschrieben wurde und wird, an einem Werkzeug anzuordnen. Dabei ist in erster Linie an einen Schraubendreher beziehungsweise ein Schraubendreherbit gedacht, aber auch an einen Schraubenschlüssel.

Schrauben, die eine Drehantriebsausbildung nach der Erfindung aufweisen, lassen sich unter Verzicht auf die besonderen Vorteile der Erfindung auch mit Werkzeugen verschrauben, die nicht der Erfindung entsprechen.

Weitere Merkmale, Einzelheiten und Vorzüge der Erfindung ergeben sich aus den Ansprüchen, der folgenden Beschreibung bevorzugter Ausführungsformen der Erfindung sowie anhand der Zeichnung. Hierbei zeigen:
- Figur 1: die Seitenansicht einer Drehantriebsausbildung in Form eines Antriebsvorsprungs;
- Figur 2: die perspektivische Ansicht des Antriebsvorsprungs der Figur 1;
- Figur 3: die Draufsicht auf den Antriebsvorsprung von oben in Figur 1;
- Figur 4: einen Axialschnitt durch einen Schraubenkopf nach der Erfindung;
- Figur 5: die Draufsicht auf den Schraubenkopf der Figur 4;
- Figur 6: eine der Figur 3 entsprechende Darstellung eines Antriebsvorsprungs mit einer geänderten Querschnittsform
- Figur 7: eine der Figur 1 entsprechende Seitenansicht bei einer zweiten Ausführungsform;
- Figur 8: die perspektivische Ansicht des Antriebsvorsprungs der Figur 7;
- Figur 9: die Draufsicht auf den Antriebsvorsprung der Figur 7 von oben;
- Figur 10: einen Axialschnitt durch einen Schraubenkopf der Ausführungsform nach Figur 7 bis Figur 9;
- Figur 11: eine vergrößerte Teildarstellung der Figur 9.

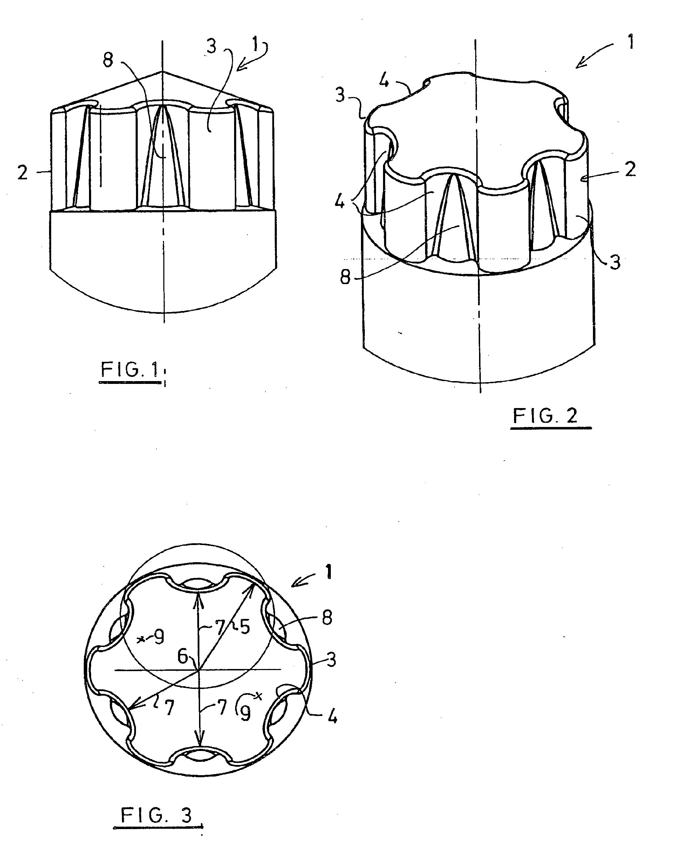

Die ersten drei Figuren zeigen unterschiedliche Ansichten eines Antriebsvorsprungs 1 mit einer Drehantriebsausbildung nach der Erfindung. Es kann sich entweder um das Antriebsende eines Bolzens oder um das Ende eines Schraubendreherbits handeln. Diese Drehantriebsausbildung weist eine Seitenwand 2 auf, die eine Grundform mit einer zylindrischen Mantelfläche hat. Die Kontur dieser Mantelfläche, am besten zu sehen in der Draufsicht der Figur 3, weist Vorsprünge 3 und Rücksprünge 4 auf. Die Vorsprünge 3 und Rücksprünge 4 gehen bündig und ohne Kanten ineinander über. Insgesamt bildet die Kontur der Seitenwand beziehungsweise der Mantelfläche der Seitenwand eine geschlossene Kurve, wobei die Vorsprünge 3 und Rücksprünge 4 untereinander die gleiche Form aufweisen. Legt man einen Kreis so, dass er alle Vorsprünge 3 an deren Außenseite berührt, so hat dieser Kreis und damit die maximale Radialerstreckung der Vorsprünge 3 einen Radius 5 von dem Mittelpunkt des Antriebsvorsprungs 1. Dieser Radius 5 ist der maximale Radius der Seitenwand von der Mittelachse 6. Er wird im Folgenden als Maximalradius bezeichnet.

Man kann ebenfalls einen Kreis um die Mittelachse 6 legen, der die Innenseiten der Rücksprünge 4 berührt. Dieser Kreis hat dann einen kleineren Radius 7, der im Folgenden als Minimalradius bezeichnet werden wird. Die Kontur der Seitenwand 2 des Antriebsvorsprungs 1 ändert sich also zwischen diesen beiden Werten.

Zwischen den Vorsprüngen 3 ist nun jeweils eine Ausbuchtung zu erkennen, die eine äußere Kegelfläche 8 bildet. Diese Kegelflächen 8 sind mittig zwischen den Vorsprüngen 3 angeordnet. Ihre maximale radiale Erstreckung ist an dem dem freien Ende des Antriebsvorsprungs 1 entgegengesetzten Ende der Drehantriebsausbildung vorhanden. Die maximale Radialerstreckung, was man allen Figuren entnehmen kann, reicht nicht bis zum Maximalradius 5. Die Spitze des Kegels jeder Kegelfläche 8 ist in Richtung auf das freie Ende des Antriebsvorsprungs 1 zu denken. Die Breite der Kegelflächen 8 ist so, dass sie von dem dem freien Ende des Antriebsvorsprungs 1 abgewandten Ende der Drehantriebsausbildung bis zum freien Ende des Antriebsvorsprungs 1 abnimmt und an dem in Figur 1 und 2 oberen Ende in einer Spitze endet.

Alle Kegelflächen 8 sind gleich groß. Die gedachte Kegelachse jeder Kegelfläche 8 ist gegenüber der Mittelachse 6 in Drehantriebsausbildung versetzt, und zwar in Richtung auf die Kegelfläche 8. Beispielsweise liegt die gedachte Kegelachse 9 jenseits der Hälfte des Abstands der Innenseite des Rücksprungs 4 von der Mittelachse 6 der Drehantriebsausbildung.

Bei der in den Figuren 1 bis 3 dargestellten Ausführungsform einer Drehantriebsausbildung in Form eines Antriebsvorsprungs 1 verlaufen die Vorsprünge 3 und Rücksprünge 4 in der Draufsicht der Figur 3 längs elliptischer Kurven. Bei den Kegelflächen 8 handelt es sich im dargestellten Ausführungsbeispiel um Kreiskegelflächen. Man kann aus den Figuren, insbesondere der Figur 3, entnehmen, dass durch die stärkere Krümmung der Kegelflächen 8 ein größerer Teil der Seitenwand im zylindrischen Bereich bleibt und damit für die Übertragung von Drehmomenten zwischen einem Werkzeug mit dieser Drehantriebsausbildung und einem Werkstück mit einer komplementären Drehantriebsausbildung zur Verfügung steht.

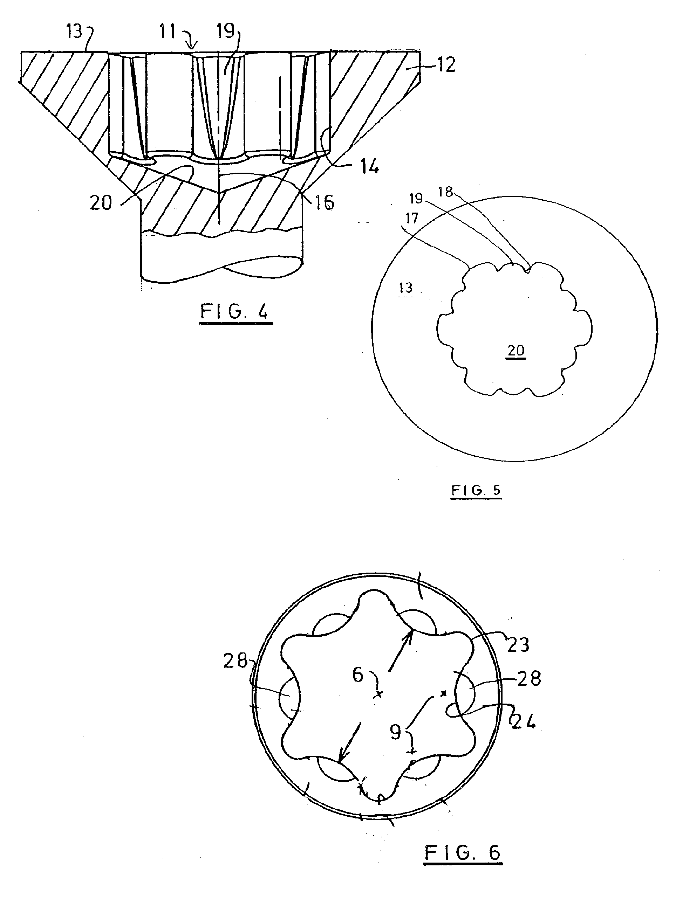

Während die Figur 1 eine Seitenansicht eines Antriebsvorsprungs 1 zeigt, zeigt nun die Figur 4 das Beispiel einer Antriebsvertiefung 11 in dem Kopf 12 einer Senkkopfschraube. Die Form der Antriebsvertiefung 11 ist zu der Form des Antriebsvorsprungs komplementär.

Die Antriebsvertiefung 11 geht von der Stirnfläche 13 des Kopfs 12 aus. Die Antriebsvertiefung enthält eine Seitenwand 14, deren Grundform zylindrisch ist, also parallel zu der Mittelachse 16 der Vertiefung verläuft. Wie man der Figur 5 entnehmen kann, weist die Kontur der Seitenwand 14 die gleiche Form auf wie die Kontur der Seitenwand 2 des Antriebsvorsprungs 1 in Figur 3. Die Kontur enthält also Vorsprünge 17 und zwischen diesen Rücksprünge 18. Etwa in der Mitte zwischen jeweils zwei Vorsprüngen 17 ist eine Kegelfläche 19 ausgebildet, die Teil eines Kegels mit einer in das Innere in Richtung auf den Boden 20 der Antriebsvertiefung 11 gerichteten Spitze ist.

Es wurde bereits erwähnt, dass die Kontur der Drehantriebsausbildung sowohl bei der Ausführungsform der Figur 1 bis Figur 3 als auch bei der Ausführungsform nach Figur 4 und Figur 5 von ineinander übergehenden Bögen elliptischer Form gebildet wird. Die Erfindung ist aber nicht auf eine spezielle Art des Verlaufs der Kontur beschränkt, sondern kann auch bei einem anderen Verlauf der Kontur Anwendung finden. Dies wird vereinfacht an dem Beispiel der Figur 6 erläutert. Hier besteht die Kontur aus aneinander anschließenden Bögen mit einer Kreisform, wobei die nach außen gerichteten Vorsprünge 23 und die Rücksprünge 24 einen unterschiedlichen Radius aufweisen. Der Radius der Rücksprünge 24 ist doppelt so groß wie der Radius der Vorsprünge 23. Auch hier sind zwischen den Vorsprüngen 23 in der Mitte der Rücksprünge 24 an der Außenseite Kegelflächen 28 ausgebildet, die in der Seitenansicht genauso aussähen wie bei der Ausführungsform nach Figur 1 und Figur 2.

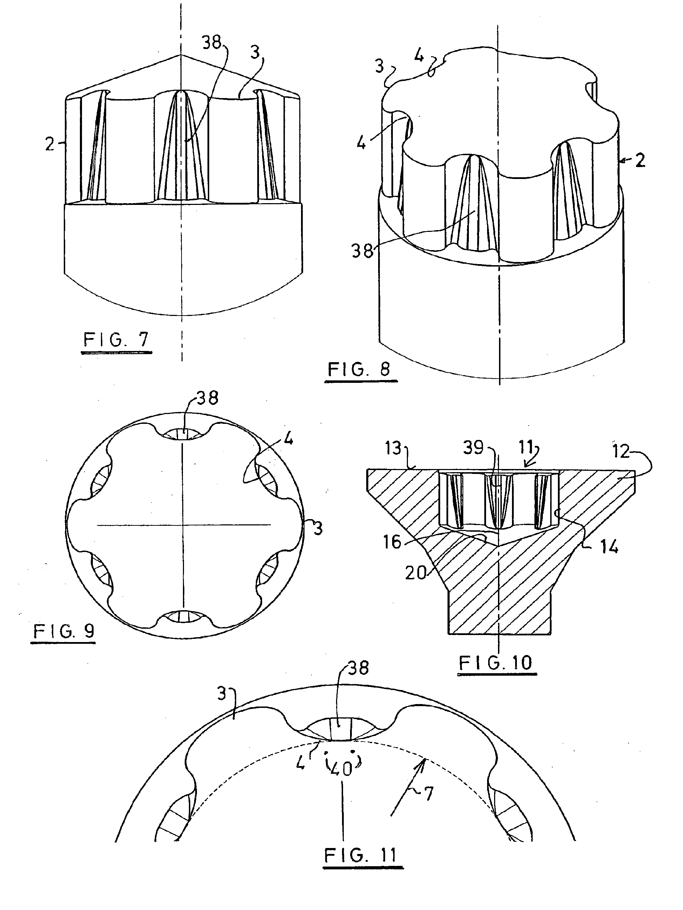

Bei den bisher behandelten Ausführungsformen sind die Kegelflächen 8, 19, 28 Teile der Oberflächen von geraden Kreiskegeln. Die folgenden Ausführungsformen, die in den Figuren 7 bis 11 dargestellt sind, verwenden Kegelflächen 38, 39, die Teil eines Kegels mit elliptischem beziehungsweise ovalem Querschnitt sind.

Die Figuren 7 - 9 entsprechen den Figuren 1 - 3, so dass nur noch die Unterschiede beschrieben werden. Die Kegelflächen 38 zwischen den Vorsprüngen 3 sind, was man am besten in Figur 9 erkennen kann, Teile von Kegeloberflächen mit elliptischem Querschnitt. Dadurch wirken sie in Umfangsrichtung gegenüber den Kreiskegelflächen der vorhergehenden Ausführungsform langgestreckter. Dies gilt sowohl für die Kegelflächen 38 an der Außenseite eines Antriebsvorsprungs als auch für die Kegelflächen 39 an der Innenseite einer Antriebsvertiefung 11 in dem Schraubenkopf 12 nach Figur 10.

Die Figur 11 zeigt eine vergrößerte Darstellung, nämlich einen Ausschnitt aus der Figur 9. Die beiden Brennpunkte 40 der elliptischen Grundform der Kegelflächen 38 liegen etwa im Bereich des Kreises, der den Minimalradius 7 aufweist. Die längere Abmessung des Querschnitts des Kegels, zu dem die Kegelflächen 38 gehören, verläuft tangential oder anders ausgedrückt in Umfangsrichtung der Drehantriebsausbildung.

Auch bei der Ausführungsform, bei der die Kegelflächen 38, 39 Kegeloberflächen von Kegeln mit einem ovalen oder elliptischem Querschnitt sind, können die Vorsprünge 3 beziehungsweise Rücksprünge 4 der Außenkontur andere Formen aufweisen als in Figur 7 bis Figur 11 dargestellt. Es wird hierzu auf die Ausführungsform nach Figur 6 verwiesen.

## Patentansprüche

1. Drehantriebsausbildung in Form einer Antriebsvertiefung (11),
1.1 deren zum Kontakt mit einem Gegenelement während des Drehantriebs bestimmte Seitenwand (14) eine im wesentlichen zylindrische Grundform aufweist,
1.2 wobei der Abstand der Seitenwand (14) von einer Mittelachse (16) der Antriebsvertiefung (11) sich zwischen einem Minimalradius und einem Maximalradius zur Bildung von abwechselnden Vorsprüngen (17) und Rücksprüngen (18) ändert und
1.3 wobei die Seitenwand (14) in einem in radialer Richtung zwischen dem maximalen und minimalen Durchmesser der Antriebsvertiefung (11) liegenden Bereich auf jeweils einer Kegelfläche (19) jeweils eines sich in das Innere der Antriebsvertiefung (11) hinein verjüngenden Kegels liegt,
**dadurch gekennzeichnet, dass**
1.4 die Kegelachse (9) des Kegels gegenüber der Achse (16) der Antriebsvertiefung (11) in radialer Richtung nach außen versetzt ist.

2. Drehantriebsausbildung in Form eines Antriebsvorsprungs (1),
2.1 dessen zum Kontakt mit einem Gegenelement während des Drehantriebs bestimmte Seitenwand (2) eine im wesentlichen zylindrische Grundform aufweist,
2.2 wobei der Abstand der Seitenwand (2) von einer Mittelachse (6) des Antriebsvorsprungs (1) sich zwischen einem Minimalradius (7) und einem Maximalradius (5) zur Bildung von abwechselnden Vorsprüngen (3) und Rücksprüngen (4) ändert und
2.3 wobei die Seitenwand (2) in einem in radialer Richtung zwischen dem maximalen und minimalen Durchmesser des Antriebsvorsprungs (1) liegenden Bereich auf jeweils einer Kegelfläche (8) jeweils eines sich in Richtung auf das Ende des Antriebsvorsprungs (1) verjüngenden Kegels liegt,
**dadurch gekennzeichnet, dass**
2.4 die Kegelachse (9) des Kegels gegenüber der Mittelachse (6) des Antriebsvorsprungs (1) in radialer Richtung nach außen versetzt ist.

3. Drehantriebsausbildung nach Anspruch 1 oder 2, bei der die Kegelfläche (8, 19, 28) zwischen den Vorsprüngen (3, 17, 23) der Grundform ausgebildet ist.

4. Drehantriebsausbildung nach einem der vorhergehenden Ansprüche, bei der die axiale Erstreckung der Kegelfläche (8, 19, 28) etwa der Tiefe der Antriebsvertiefung (11) beziehungsweise der Höhe des Antriebsvorsprungs (1) entspricht.

5. Drehantriebsausbildung nach einem der vorhergehenden Ansprüche, bei der der Abstand der Achse (9) der Kegelfläche (8, 19, 28) von der Mittelachse (16, 6) der Antriebsvertiefung (11) beziehungsweise des Antriebsvorsprungs (1) größer ist als der Abstand der Achse der Kegelfläche (8, 19, 28) von dem Rücksprung(4, 18, 24).

6. Drehantriebsausbildung nach Anspruch 5, bei der die Achse (9) der Kegelfläche (8, 19, 24) den Abstand des Rücksprungs (4, 18, 24) von der Mittelachse (16, 6) der Antriebsvertiefung (11) beziehungsweise des Antriebsvorsprungs (1) im Verhältnis von etwa 1 zu 5 teilt.

7. Drehantriebsausbildung nach einem der vorhergehenden Ansprüche, bei der die Breite jeder Kegelfläche (8, 19, 28) in Richtung auf die Spitze des Kegels abnimmt, vorzugsweise bis auf null.

8. Drehantriebsausbildung nach einem der vorhergehenden Ansprüche, bei der mindestens eine Kegelfläche (8, 19, 28) Teil eines geraden Kreiskegels ist.

9. Drehantriebsausbildung nach einem der vorhergehenden Ansprüche, bei der mindestens eine Kegelfläche Teil eines elliptischen beziehungsweise ovalen Kegels ist, bei dem die längere Achse des Querschnitts tangential zu Drehantriebsausbildung verläuft.

10. Drehantriebsausbildung nach einem der vorhergehenden Ansprüche, an einem drehanzutreibenden Gegenstand ausgebildet, insbesondere einer Schraube.

11. Drehantriebsausbildung nach einem der Ansprüche 1 bis 9, an einem Werkzeug ausgebildet, insbesondere einem Schraubendreher beziehungsweise einem Schraubendreherbit.

12. Drehantriebsausbildung nach Anspruch 11, an einem Schraubenschlüssel ausgebildet.

## Claims

1. A rotary drive design in the form of a drive cavity (11),
1.1 whose side wall (14) intended for contact with a counter element during the rotary drive has an essentially cylindrical basic shape,
1.2 wherein the distance of the side wall (14) from a center axis (16) of the drive cavity (11) varies between a minimum radius and a maximum radius for the formation of alternating projections (17) and recesses (18), and
1.3 wherein the side wall (14) is situated in a region lying in the radial direction between the maximum and minimum diameter of the drive cavity (11), on a respective conical surface (19) of a respective cone tapering into the interior of the drive cavity (11),
**characterized in that**
1.4 the cone axis (9) of which cone is outwardly offset in the radial direction in relation to the axis (16) of the drive cavity (11).

2. A rotary drive design in the form of a drive projection (1),
2.1 whose side wall (2) intended for contact with a counter element during the rotary drive has an essentially cylindrical basic shape,
2.2 wherein the distance of the side wall (2) from a center axis (6) of the drive projection (1) varies between a minimum radius (7) and a maximum radius (5) for the formation of alternating projections (3) and recesses (4), and
2.3 wherein the side wall (2) is situated in a region lying in the radial direction between the maximum and minimum diameter of the drive projection (1), on a respective conical surface (8) of a respective cone tapering in the direction towards the end of the drive projection (1),
**characterized in that**
2.4 the cone axis (9) of which cone is outwardly offset in the radial direction in relation to the center axis (6) of the drive projection (1).

3. The rotary drive design according to claim 1 or 2, wherein the conical surface (8, 19, 28) is configured between the projections (3, 17, 23) of the basic shape.

4. The rotary drive design according to any one of the preceding claims, wherein the axial extent of the conical surface (8, 19, 28) roughly corresponds to the depth of the drive cavity (11) or the height of the drive projection (1).

5. The rotary drive design according to any one of the preceding claims, wherein the distance of the axis (9) of the conical surface (8, 19, 28) from the center axis (16, 6) of the drive cavity (11) or of the drive projection (1) is greater than the distance of the axis of the conical surface (8, 19, 28) from the recess (4, 18, 24).

6. The rotary drive design according to claim 5, wherein the axis (9) of the conical surface (8, 19, 24) divides the distance of the recess (4, 18, 24) from the center axis (16, 6) of the drive cavity (11) or of the drive projection (1) in the ratio of about 1 to 5.

7. The rotary drive design according to any one of the preceding claims, wherein the width of each conical surface (8, 19, 28) decreases in the direction of the tip of the cone, preferably down to zero.

8. The rotary drive design according to any one of the preceding claims, wherein the at least one conical surface (8, 19, 28) is part of a right circular cone.

9. The rotary drive design according to any one of the preceding claims, wherein the at least one conical surface is part of an elliptical or oval cone, in which the longer axis of the cross section runs tangentially to the rotary drive design.

10. The rotary drive design according to any one of the preceding claims, configured on an object which is to be rotationally driven, in particular a screw.

11. The rotary drive design according to any one of the claims 1 to 9, configured on a tool, in particular a screwdriver or a screwdriver bit.

12. The rotary drive design according to claim 11, configured on a wrench.

## Revendications

1. Système d'entraînement en rotation sous la forme d'un creux d'entraînement (11),
1.1 dont la paroi latérale (14) prévue pour le contact avec un élément conjugué pendant l'entraînement en rotation présente une forme de base essentiellement cylindrique,
1.2 la distance de la paroi latérale (14) à un axe médian (16) du creux d'entraînement (11) variant entre un rayon minimal et un rayon maximal pour former une alternance de saillies (17) et de retraits (18) et
1.3 la paroi latérale (14) étant située dans une région située dans la direction radiale entre le diamètre maximal et le diamètre minimal du creux d'entraînement (11) à chaque fois sur une surface conique (19) d'un cône respectif se rétrécissant vers l'intérieur du creux d'entraînement (11),
**caractérisé en ce que**
1.4 l'axe de cône (9) du cône est décalé dans la direction radiale vers l'extérieur par rapport à l'axe (16) du creux d'entraînement (11).

2. Système d'entraînement en rotation sous la forme d'une saillie d'entraînement (1),
2.1 dont la paroi latérale (2) prévue pour le contact avec un élément conjugué pendant l'entraînement en rotation présente une forme de base essentiellement cylindrique,
2.2 la distance de la paroi latérale (2) à un axe médian (6) de la saillie d'entraînement (1) variant entre un rayon minimal (7) et un rayon maximal (5) pour former une alternance de saillies (3) et de retraits (4) et
2.3 la paroi latérale (2) étant située dans une région située dans la direction radiale entre le diamètre maximal et le diamètre minimal de la saillie d'entraînement (1) à chaque fois sur une surface conique (8) d'un cône respectif se rétrécissant dans la direction de l'extrémité de la saillie d'entraînement (1),
**caractérisé en ce que**
2.4 l'axe de cône (9) du cône est décalé dans la direction radiale vers l'extérieur par rapport à l'axe médian (6) de la saillie d'entraînement (1).

3. Système d'entraînement en rotation selon la revendication 1 ou 2, dans lequel la surface conique (8, 19, 28) est réalisée entre les saillies (3, 17, 23) de la forme de base.

4. Système d'entraînement en rotation selon l'une quelconque des revendications précédentes, dans lequel l'étendue axiale de la surface conique (8, 19, 28) correspond approximativement à la profondeur du creux d'entraînement (11), respectivement à la hauteur de la saillie d'entraînement (1).

5. Système d'entraînement en rotation selon l'une quelconque des revendications précédentes, dans lequel la distance de l'axe (9) de la surface conique (8, 19, 28) à l'axe médian (16, 6) du creux d'entraînement (11), respectivement de la saillie d'entraînement (1), est supérieure à la distance de l'axe de la surface conique (8, 19, 28) au retrait (4, 18, 24).

6. Système d'entraînement en rotation selon la revendication 5, dans lequel l'axe (9) de la surface conique (8, 19, 24) divise la distance du retrait (4, 18, 24) à l'axe médian (16, 6) du creux d'entraînement (11), respectivement de la saillie d'entraînement (1), dans un rapport d'environ 1 à 5.

7. Système d'entraînement en rotation selon l'une quelconque des revendications précédentes, dans lequel la largeur de chaque surface conique (8, 19, 28) dans la direction de la pointe du cône diminue, de préférence jusqu'à zéro.

8. Système d'entraînement rotation selon l'une quelconque des revendications précédentes, dans lequel au moins une surface conique (8, 19, 28) fait partie d'un cône circulaire droit.

9. Système d'entraînement en rotation selon l'une quelconque des revendications précédentes, dans lequel au moins une surface conique fait partie d'un cône elliptique, respectivement ovale, dans lequel l'axe plus long de la section transversale s'étend tangentiellement au système d'entraînement en rotation.

10. Système d'entraînement en rotation selon l'une quelconque des revendications précédentes réalisé au niveau d'un objet à entraîner en rotation, en particulier une vis.

11. Système d'entraînement en rotation selon l'une quelconque des revendications 1 à 9, réalisé sur un outil, en particulier un tournevis, respectivement un embout de tournevis.

12. Système d'entraînement en rotation selon la revendication 11, réalisé sur une clé.
